# EUROPEAN PATENT SPECIFICATION

(11) **EP 2 563 158 B1**
(45) Date of publication and mention of the grant of the patent: **08.08.2018**
(21) Application number: 11722729.8
(22) Date of filing: 28.04.2011
(51) Int. Cl.: A23G 9/04, A23G 9/34

(54) **WATER ICE COMPOSITION**
WASSEREISZUSAMMENSETZUNG
COMPOSITION DE GLACE À L'EAU

(30) Priority: 30.04.2010 EP 10004576
(43) Date of publication of application: 06.03.2013
(73) Proprietor: Tiense Suikerraffinaderij N.V., 1150 Brussel (BE)
(72) Inventor: WOUTERS, Rudy, B-2260 Westerlo (BE)
(74) Representative: Koster, Nico
(86) International application number: PCT/EP2011/002132
(87) International publication number: WO 2011/141129

(56) References cited:
- EP-A1- 0 941 668
- EP-A1- 0 965 277
- EP-A1- 1 817 964
- EP-A1- 1 891 863
- EP-A1- 2 070 424
- WO-A1-02/087358
- WO-A1-02/087359
- CN-A- 101 341 922
- CN-A- 101 530 152
- JP-A- 10 117 693
- JP-A- 10 117 694
- JP-A- 10 117 763
- US-A- 5 246 725
- US-A1- 2006 286 248

## Description

The invention relates to a water ice composition.

Water ice compositions are food compositions that are as such widely known. Consumers have certain expectations from frozen water ice products; these expectations include a number of organoleptic qualities such as a sufficient degree of sweetness, a flavour, and a certain 'mouthfeel'.

It is also known that it is a disadvantage of traditional water ice compositions that they are not tooth-friendly, due to the presence of certain cariogenic carbohydrates like glucose and sucrose.

Attempts have been made to make water ice more tooth-friendly; EP-A-2 070 424, for example, discloses that the incorporation of a buffer and fructo-oligosaccharides may improve the tooth-friendliness of a water ice. Nevertheless, a need remains for alternative water ice compositions, having the same or even an improved tooth-friendly character. It is the objective of the present invention to provide such compositions.

The objective is achieved in that the water ice composition contains between 5 and 40 wt.% of a sweetener composition, whereby the sweetener composition contains between 10 and 100 wt.% of carbohydrates and optionally derivatives thereof, wherein essentially all the carbohydrates or derivatives thereof are non-cariogenic, arid wherein:
- at least 99.5 wt.% of all carbohydrates or derivatives thereof in the water ice composition are tooth-friendly;
- the total wt.% of any sugar alcohols in the sweetener composition is smaller than the total wt.% of the carbohydrates in the sweetener composition;
- the water ice composition as a whole contains between 7 and 30 wt.% of isomaltulose and between 2 and 12 wt.% of D-tagatose, and
- the water ice composition contains less than 5 wt.% of fat and less than 5 wt.% of proteins.

It is an advantage of the water ice composition of the invention that a water ice, a sherbet, or a sorbet may be prepared having improved characteristics regarding tooth-friendliness.

EP-A-1 891 863 discloses frozen confections comprising up to 9 wt.% of sugars and furthermore maltitol and/or xylitol, complex saccharides, and intense sweeteners.

US-A-5 246 725 discloses a spoonable frozen food product that includes a sugar alcohol and glycerine, and furthermore a gelling agent, a bulking agent, and a synthetic sweetener.

EP-A-0 941 668 discloses a sherbet containing erythritol.

JP 10117693 A aims at providing a sherbet with largely decreased calorie compared to a conventional sherbet by using erythritol as a sweetener. A sherbet mix containing water, erythritol (which is a tetrose sugar alcohol and generally used by 10 to 35wt.% of the sherbet mix, and a commercial erythritol may be used), and a froth stabilizer (generally used by 0.05 to 5W/V%, and for example, when gelatin is used, preferably 0.4 to 1W/V%) is stirred while cooling. The mixture is aerated to obtain 50 to 130% overrun (air content) to precipitate ice crystal.

CN 101530152 A relates to functional health-care ice cream of cold drink food, which is technically characterized in that the ice cream is prepared by the following raw materials according to a definite proportion: xylitol, maltitol, isomaltitol,sorbitol, isomaltitol oligosaccharide, skim milk powder, natural cream, maltodextrin, sodium pyrophosphate, gelatin, guar gum, locust bean gum, xanthan gum, sodium carboxymethyl cellulose, monoglyceride, monodiacylglycero, and the balance of drinking water.

EP 0965277 A1 discloses an iced dessert that comprises erythritol as sweetening and texture agent, and an agent for controlling the melt of the ice dessert selected from dextrins and/or non-digestible dextrins.

WO 02/087358 A1 discloses that a combination of one or more non-nutritive sweeteners, a sugar alcohol and D-tagatose are included in a zero- or low-calorie beverage or food product to achieve a taste substantially similar to that of a full-calorie beverage or food product. The combination is suitable for use in zero- or low-calorie frozen carbonated beverages.

CN 101341922 A discloses xylitol ice-cream which relates to the improvement of ice-cream components. The purpose of the invention is to provide xylitol ice-cream which has very good health care function and is suitable to be eaten by diabetic patients. The xylitol ice-cream comprises xylitol, and is characterized in that xylitol accounts for 50 weight percent to 70 weight percent of the ice-cream:

JP 10117694 A aims at providing a low-calorie sherbet with soft texture by incorporating erythritol and at least one material selected from sugars, sugar alcohols and polydextrose. Erythritor and at least one material selected from sugars (preferably sucrose), sugar alcohols (preferably lactitol) and polydextrose are incorporated by 10 to 35wt.% in total of a sherbet mix. When sugars are used, the amt. of erythritol is controlled to >=50% and <=100% of the sum amt. of erythritol and sugars. When sugar alconols and/or polydextrose are used, the amt. of erythritol is controlled to >=25% and <=100% of the sum amt.

EP 1817964 A1 relates to a functional food ingredient, which replaces sugar on a 1/1 weight and/or volume basis in food recipes containing sucrose, with a substantial caloric reduction in view. More than an ingredient, it has to be seen as a functional ingredient, since it possesses some health promoting effects. The functional food replacement for sucrose according to the present invention comprises prebiotic fibres and sweeteners, and possibly other non selective fibres, minerals, vitamins and probiotic strains.

JP 10117763A aims at providing a beverage having low hardness in frozen state, exhibiting the texture of soft ice-cream, having low caloric value, low sugar content and low sweetness and easily eatable by freezing in a home refrigerator, etc., by using prescribed amounts of an alcohol and a sugar alcohol as additives. This beverage has an alcohol concentration of 1-18vol.%, preferably 4-8vol.% and contains preferably <=30wt.%, more preferably 15-25wt.% of a sugar alcohol such as erythritol and xylitol. The frozen alcoholic beverage having a soft ice-cream like texture is produced by stirring and mixing an alcohol raw material, a sugar and a thickening stabilizer and freezing the mixture.

WO 02/087359 A1 A discloses that a combination of a sugar alcohol and D-tagatose is used to produce naturally sweetened, diet beverages or food products. The sugar alcohol and D-tagatose can also be used in combination with one or more nutritive sweeteners to lower the calories of a full-calorie beverage or food product while preserving the taste.

US 2006/286248 A1 discloses a reduced carbohydrate ice cream or other frozen dessert product that contains a low-digestible sweetener system and a fermentable fiber material. The a low-digestible sweetener system consists of one or more low-digestible sweeteners having a molecular weight of from about 90 to about 190; and is typically a low molecular weight saccharide or a polyol. Typical low-digestible sweeteners include mannitol, maltitol, sorbitol, lactitol, erythritol, xylitol, isomalt, glycerin, talitol, mannose, tagatose, fructose, arabinose, fucose, lycose, ribose, sorbose, talose, and xylose, and mixtures thereof. The low-digestible sweetener replaces the digestible sugars to provide the appropriate freezing point depression of the product. The level of fermentable fiber is sufficient to mitigate a Taxation effect that can be caused by ingestion of the amount of the low-digestive sweetener. The fermentable fiber can be an inulin, a maltodextrin resistant to human digestion, an oligofructose, a fructooligosaccharide, a high water binding fermentable fiber, and a mixture thereof.

The invention relates to a water ice composition, i.e. a food composition suitable to prepare a water ice from, through for example the simple act of freezing the water ice composition. A typical traditional water ice composition contains water, about 10 to 20 wt.% sucrose, about 5 to10 wt.% glucose, plus minor amounts of further compounds such as flavours, stabilizers, and colour-bringing compounds. As is known, a water ice is different from an ice cream, the difference lying primarily in the amount of proteins and fat. Ice creams typically contain a certain amount of fat and protein, typically around 10 wt.% of each, which may originate from a dairy product, whereas fat and protein are in a water ice, a sherbet, or a sorbet either not present or present in only very low amounts of typically at most 5, 4, 3, 2, 1, 0.5 or even essentially 0 wt.% (based on the total water ice composition).

In the field of ice products, in particular in the field of ice cream, milk ice and sherbet products, it occurs that proteins are not designated as such but rather as part of a fraction called milk solids non-fat (MSNF). In this notation, the water ice according to the invention should preferably contain at most 6, 5, 4, 3, 2, 1, 0.5, or even essentially 0 wt.% MSNF.

As used herein, the weight percentages as given are relative to the total water ice composition or a specified section thereof (noted per occurrence). The weight percentages do not take any overrun into account. As is known in the field of ice products, overrun is an additional volume created in an ice product via the incorporation of a gas such as air. Overrun is usually, and also herein, expressed as the percentage of additional volume compared to the water ice composition. Overrun is typically absent or at least below 25% or even below 15, 10, or 5% in a water ice; in a sorbet or sherbet, however, overruns of 30 to 50% are typical.

As used herein, the terms 'consist(ing) essentially of' or 'essentially all' and equivalents have, unless noted otherwise, in relation to a composition the usual meaning that deviations in the composition may occur, but only to such an extent that the essential characteristics and effects of the composition are not materially affected by such deviations.

The water ice composition of the invention as a whole contains between 5 and 40 wt.% of a sweetener composition. As meant herein, the term sweetener composition means a sweet-tasting compound or a sweet-tasting mixture of compounds. Furthermore, as meant herein, all carbohydrates or derivatives thereof as contained in the water ice composition as a whole are considered to be part of the sweetener composition. Moreover, as meant herein, all compounds in the water ice composition that are used for the purpose of achieving freezing point depression are considered to be part of the sweetener composition. Preferably, the water ice composition contains at least 8, 11, 14, 17, or 20 wt.% of a sweetener composition, and at most 38, 36, or 34 wt.% of a sweetener composition.

The sweetener composition as used in the present invention contains between 10 and 100 wt.% of carbohydrates and optionally derivatives thereof. In order to reach an improved level of tooth-friendliness as compared to traditional water ice compositions, essentially all of the carbohydrates or derivatives thereof should be non-cariogenic. In an embodiment of the invention, the portion of non-cariogenic carbohydrates or derivatives thereof is such that the water ice composition may be characterised as being 'sugar-free', a denomination typically associated with the presence of maximum 0.5 wt.% of cariogenic carbohydrates in the water ice composition as a whole.

Preferably, the sweetener composition contains at least 15, 20, 25, 30, 35, 40, 45, or 50 wt.% of carbohydrates and optionally derivatives thereof; the sweetener composition contains preferably at most 95, 90, 85, 80, or 75 wt.% of carbohydrates and optionally derivatives thereof. At least 99.5, or even at least 99.6, 99.7, 99.8, or 99.9
of all carbohydrates or derivatives thereof in the water ice composition are tooth-friendly.

As is known, a compound such as a carbohydrate or derivative thereof may be characterised as non-cariogenic if consumption thereof does not lead to significant acids formation in the mouth, typically via fermentation of the compound, which in turn can lead to demineralisation of teeth. As quantitative indication of non-cariogenicity of a compound, it is customary to test whether the compound passes the pH Telemetry test, i.e. whether consumption of the compound will not lead to a decrease of the pH in the mouth to a level of 5.7 or lower in that test. Compounds passing the pH Telemetry test are then - and also herein - designated as tooth-friendly. The test is determined in inter-dental plaque deposits, which should be at least 3 days old but not older than 7 days. The electrodes need to be calibrated with appropriate buffers (pH 4 and 7) at mouth temperature before and immediately after the test. The function of the plaque-pH telemetry equipment and of plaque metabolism must be confirmed at each telemetry test by rinsing with 10 ml of 0.3 mol/l (10%) sugar solution, or by eating a sugar-containing analogue of the test product. This positive control must show a clearly visible effect on the pH curve, and lower the plaque pH to levels below 5. After the 30-minute measurement period after administration of the test product and prior to the application of the positive control, the plaque pH should be neutralized by rinsing with water or by chewing of neutral paraffin for salivary stimulation.

The plaque-pH telemetry test curves should be the result of at least two measured pH values per minute. Products will be viewed "toothfriendly" if, proven by intra-oral plaque-pH telemetry test on humans, the pH of inter-dental plaque is not lowered below 5.7 by bacterial fermentation, either during consumption or flushing, or during a period of 30 minutes after consumption. The pH curves must show the time of consumption of the test product and the 30-minute period after consumption (i.e. after the test product is swallowed or spit out after the rinse). A report on the "tooth-friendly" characteristics of a product should show the plaque-pH telemetry detection (curves) of at least four different volunteers.

With a derivative of a carbohydrate is meant a carbohydrate that has undergone a chemical reaction so that it is at least partly no longer a true carbohydrate but still is suitable as food ingredient. Known examples of such derivatives are hydrogenated carbohydrates such as isomalt, sorbitol, xylitol, erythritol, mannitol, and maltitol. Hydrogenated carbohydrates are also referred to as polyols or sugar alcohols.

Carbohydrates or derivatives thereof that are tooth-friendly are as such known. Non-exhaustive examples of such compounds include the carbohydrates isomaltulose, trehalulose and D-tagatose, and the carbohydrate derivatives isomalt, erythritol, and xylitol.

In one preferred embodiment, the sweetener composition in the water ice composition contains a mixture of one or more non-cariogenic carbohydrates and one or more non-cariogenic carbohydrate derivatives. An example of such a mixture is the mixture of isomaltulose or isomaltulose combined with D-tagatose and erythritol.

If the water ice composition contains a carbohydrate derivative, in particular a sugar alcohol, the total wt.% of any carbohydrate derivatives, in particular sugar alcohols, in the sweetener composition is smaller than the total wt.% of the carbohydrates in the sweetener composition. It is thus preferred that the weight ratio between the sum of carbohydrates and the sum of carbohydrate derivatives, in particular sugar alcohols is at least 51:49, more preferably at least 55:45, 60:40, 65:35, 70:30, 75:25, 80:20, 85:15, 90:10, or even 95:15; the ratio may be at most 99:1, or even essentially 100:0.

In another preferred embodiment, the water ice composition contains no carbohydrates or derivatives thereof that are associated with laxative effects at high dosages. Example of such compounds are various sugar alcohols such as isomalt. In a preferred embodiment, the water ice composition contains essentially no sugar alcohols, more preferably essentially no carbohydrate derivatives. In yet another preferred embodiment, the sweetener composition contains essentially only isomaltulose and/or D-tagatose as carbohydrates, and essentially no derivatives of carbohydrates; in this embodiment, it is most preferred that the sweetener composition consists essentially of isomaltulose and D-tagatose.

Isomaltulose, or α-D-Glucopyranosyl-(1→76)-D-fructose, is an as such known disaccharide compound. Isomaltulose is an isomer of sucrose, the difference being that the linkage between the glucose- and fructose moieties is 1→76, not 1→2 as in sucrose, Isomaltulose occurs in nature, a.o. as a component in honey. For industrial production purposes, isomaltulose may be prepared via an as such known enzymatic rearrangement of sucrose. In the pH telemetry test, isomaltulose is characterised as being tooth-friendly.

D-Tagatose, or (3S,4S,5R)-1,3,4,5,6-Pentahydroxy-hexan-2-one, is an as such known monosaccharide compound. Tagatose occurs in nature. For industrial production purposes, D-tagatose may be prepared from galactose in an as such known isomerisation reaction. In the pH telemetry test, D-tagatose is characterised as being tooth-friendly.

In one embodiment of the invention, the sweetener composition contains isomaltulose and/or D-tagatose, and preferably essentially no further carbohydrates or derivatives thereof.

When the water ice composition of the invention is frozen in order to prepare a water ice, the organoleptic properties of the resulting water ice are influenced by a.o. the freezing point depression effects of the sweetener composition. As is known, the freezing point depression effects of a disaccharide are different from that of a monosaccharide. Both isomaltulose and D-tagatose are present in the sweetener composition. This has the advantage that a favourable combination of sweetness and mouthfeel in a frozen water ice may be achieved, including an optimal texture upon consumption, i.e. not too long and neither too short.

The water ice composition as a whole contains between 7 and 30 wt.% of isomaltulose and between 2 or 3 and 12 wt.% of D-tagatose. In this embodiment, it is preferred that essentially no cariogenic carbohydrates are present.

It was found that the presence of both isomaltulose and D-tagatose in the water ice composition allows for the achieving of a variety of textures in a water ice prepared therewith, depending on the specific amounts of either isomaltulose or D-tagatose in the water ice composition. It was found that increasing the amount of isomaltulose can lead to a shortening and/or hardening of the texture of the water ice. It was furthermore found that increasing the amount of D-tagatose can lead to a lengthening and/or softening of the texture of the water ice.

If both isomaltulose and D-tagatose are contained in the sweetener composition, then it is preferred that the weight ratio between isomaltulose and D-tagatose is at least 1:99, 10:90, 20:80, 30:70, 40:60, 50:50, 60:40, 70:30, 80:20, 90:10, or 99:1. The said ratio is preferably at most 99:1, 90:10, 80:20, 70:30, 60:40, 50:50, 40:60, 30:70, 20:80, 10:90, or 1:99.

In a further embodiment of the invention, a desired level of freezing point depression or texture is achieved in that the sweetener composition contains a further compound other than isomaltulose and/or D-tagatose; an example of such a further compound is glycerol, which can be used in amounts lying preferably between 0.1 and 10 wt.% of the water ice composition as a whole, more preferably between 0.5 or 1 and 8 or 6 wt.%.

The sweetener composition according to the invention should provide a certain sweetness to the water ice composition. In a traditional water ice composition, the sweetener composition can consist of sucrose and glucose. As glucose provides less sweetness than sucrose, the sweetness of this example of a traditional sweetener composition is, on a weight-for-weight basis, typically around 60% of that of sucrose. It is preferred that the sweetener composition of the invention as a whole provides, on a weight-for weight basis, at least 20% of the sweetness of sucrose, and at most 400% of the sweetness of sucrose. More preferably, the sweetener composition provides between 25 or 35 and 300%, between 40 and 250%, between 50 and 200%, or even between 55 or 60 and 150% of the sweetness of sucrose.

Depending on the choice and quantity of the carbohydrate(s) and the optional derivative(s) thereof in the sweetener composition, it may be that these compounds as such provide less than the desired amount of sweetness to the sweetener composition. In such a case, it may be helpful to incorporate other types of sweeteners into the sweetener composition. Examples of such other types of sweeteners are high-intensity sweeteners such as for example aspartame, acesulfame-K, saccharin, sodium cyclamate, sucralose, and rebaudioside A and other Stevia-derived sweeteners, or mixtures of such compounds. In one preferred embodiment, natural high-intensity sweeteners are incorporated; non-limiting examples of such sweeteners include Stevia-derived sweeteners, Brazzein, and Monellin.

Since the sweetener composition can fulfil the criteria of tooth-friendliness, the option is thereby created for the whole of the water ice composition to fulfil these criteria too. Preferably, therefore, the other constituents of the water ice composition are chosen such that they are tooth-friendly. In order to reach the goal that the water ice composition as a whole is tooth-friendly, it may be preferred to ensure that the pH of the water ice composition, as measured at 20°C, is between 5.7, 6.0, 6.5 or 7.0 and 10.0, 9.0, 8.5 or 8.0. However, it is well-known that certain flavours such as for example many fruit flavours are acids. Nevertheless, as is known a water ice product can even then still be considered to be tooth-friendly if the erosive potential is determined to be sufficiently low - i.e. acid exposure not more than 40 mmol H⁺.min in the known standardized test as elaborated on a.o. www.toothfriendly.com. Ingredients such as flavours etc. that satisfy this standard are a such known. In a preferred embodiment, therefore, the water ice composition as a whole is formulated such that the erosive potential is at most 40 mmol H⁺.min.

The invention also relates to a water ice or sorbet or sherbet, prepared from and consisting essentially of the water ice composition according to the invention. The preparation of the water ice or sorbet or sherbet according to the invention may be done by freezing techniques and other techniques such as extrusion that are as such known in the field of water ice preparation. As is known, the choice of terminology: 'water ice', 'sherbet', and 'sorbet' are a.o. determined by the presence and amount of overrun, and by the presence of a small amount of at most 5, preferably at most 4, 3, 2, 1, or 0.5 wt.% of fat and at most 5, preferably at most 4, 3, 2, 1, or 0.5 wt.% of protein or MSNF.

The invention is illustrated with the following examples, without being limited thereto.

### Examples 1 - 3 and Comparative Experiment A

For each of four water ice compositions, the ingredients were mixed together using a Silverson high-speed mixer during ten minutes at 8600 rpm and at a temperature of 55 - 60°C. Subsequently, the compositions were placed in a refrigerator and kept at 6°C for 24 hours. Individual samples were then prepared and frozen at -18°C for 48 hours.

The full composition of the water ice compositions is provided in Table 1. In all cases, water ice samples were successfully prepared. The overrun in all samples was 25 vol.%. The water ice samples so obtained were evaluated in a sensory test by a human test panel.

**Table 1 - Water ice compositions**

| Ingredient | A | 1 | 2 | 3 |
|---|---|---|---|---|
| Water | 70,00 | 70,00 | 70,00 | 70,00 |
| Sucrose | 23,00 | 0,00 | 0,00 | 0,00 |
| Isomaltulose | 0,00 | 29,47 | 22,44 | 20,45 |
| D-Tagatose | 0,00 | 0,00 | 7,00 | 9,00 |
| Glucose | 6,47 | 0,00 | 0,00 | 0,00 |
| Stabilizer | 0,33 | 0,33 | 0,30 | 0,30 |
| Lemon Flavour | 0,20 | 0,20 | 0,15 | 0,15 |
| Stevia extract | 0,00 | 0,00 | 0,11 | 0,10 |

### Legend to Table 1

- All values in Table 1 are weight.% based on the whole of the water ice composition. Example 1 is not according to the invention.
- The Isomaltulose was Palatinose®, supplied by Beneo-Palatinit
- The glucose was a glucose syrup 40DE
- The stabilizer was Palsgaard 5911
- Flavour: supplied by Givaudan-Roure
- The Stevia-extract contained mainly Rebaudioside A, in 80% purity

The evaluation of the water ice samples by a human test panel provided the following results:
- The water ice sample made in traditional fashion in Comparative Experiment A provided a good sweetness, noticeable ice crystals, good flavour release and an agreeable texture.
- In the water ice sample not according to the invention of Example 1 the ice crystals and the flavour were, compared to Comparative Experiment A, somewhat less noticeable; the water ice sample had a harder and shorter texture.
- The water ice sample of Example 2 was very comparable to that of Comparative Experiment A in taste, sweetness, and texture.
- The water ice sample of Example 3 resembled that of Example 2, however with a longer texture, showing the onset of thread-forming upon consumption.

### Examples 4 - 5 and Comparative Experiment B

Three water ice / sorbet products were prepared in the same fashion as described for Examples 1 - 3 and Comparative Experiment A. The compositions were as outlined in Table 2. One major difference with the water ice compositions of Examples 1 - 3 and Comparative Experiment A is that the overall amount of sweetener composition was reduced. Also, the overrun was set at about 40 vol.%.

**Table 2 - Water ice compositions**

| Ingredient | B | 4 | 5 |
|---|---|---|---|
| Water | 77,50 | 77,50 | 77,50 |
| Sucrose | 15,10 | 0,00 | 0,00 |
| Isomaltulose | 0,00 | 16,55 | 14,55 |
| D-Tagatose | 0,00 | 5,00 | 7,00 |
| Glucose | 6,55 | 0,00 | 0,00 |
| Stabilizer | 0,70 | 0,70 | 0,70 |
| Orange Flavour | 0,15 | 0,15 | 0,15 |
| Stevia-extract | 0,00 | 0,10 | 0,10 |

### Legend to Table 2

- All values in Table 1 are weight.% based on the whole of the water ice composition
- The Isomaltulose was Palatinose®, supplied by Beneo-Palatinit
- The glucose was a glucose syrup 40DE
- The stabilizer was Palsgaard 5919
- Flavour: supplied by Givaudan-Roure
- The Stevia-extract contained mainly Rebaudioside A, in 80% purity

The water ice samples had a pH between 8.1 and 8.3.

## Claims

1. Water ice composition containing between 5 and 40 wt.% of a sweetener composition, whereby the sweetener composition contains between 10 and 100 wt.% of carbohydrates and optionally derivatives thereof, wherein essentially all the carbohydrates or derivatives thereof are non-cariogenic, and wherein:
• at least 99.5 wt.% of all carbohydrates or derivatives thereof in the water ice composition are tooth-friendly;
• the total wt.% of any sugar alcohols in the sweetener composition is smaller than the total wt.% of the carbohydrates in the sweetener composition;
• the water ice composition as a whole contains between 7 and 30 wt.% of isomaltulose and between 2 and 12 wt.% of D-tagatose, and
• the water ice composition contains less than 5 wt.% of fat and less than 5 wt.% of proteins.

2. Water ice composition according to claim 1, wherein the water ice composition as a whole contains between 0.1 and 10 wt.% glycerol.

3. Water ice composition according to any one of claims 1 - 2, wherein the water ice composition furthermore contains a high-intensity sweetener.

4. Water ice composition according to any one of claims 1 - 3, wherein the water ice composition fulfils the criteria for tooth-friendliness when measured by means of pH telemetry.

5. Water ice composition according to any one of claims 1 - 4, wherein the pH of the water ice composition lies between 6 and 9.

6. Water ice, sorbet, or sherbet, consisting essentially of the water ice composition of any one of claims 1 - 5.

## Patentansprüche

1. Wassereiszusammensetzung, die zwischen 5 und 40 Gew.-% an einer Süßstoffzusammensetzung enthält, wobei die Süßstoffzusammensetzung zwischen 10 und 100 Gew.-% Kohlenhydrate und gegebenenfalls Derivate davon enthält, wobei im Wesentlichen alle der Kohlenhydrate oder Derivate davon nichtkariogen sind, und wobei:
• wenigstens 99,5 Gew.-% aller Kohlenhydrate oder Derivate davon in der Wassereiszusammensetzung zahnfreundlich sind;
• der Gesamt-%-Anteil aller Zuckeralkohole in der Süßstoffzusammensetzung kleiner als der Gesamt-%-Anteil der Kohlenhydrate in der Süßstoffzusammensetzung ist;
• die Wassereiszusammensetzung als Ganzes zwischen 7 und 30 Gew.-% Isomaltulose und zwischen 2 und 12 Gew.-% D-Tagatose enthält und
• die Wassereiszusammensetzung weniger als 5 Gew.-% Fett und weniger als 5 Gew.-% Proteine enthält.

2. Wassereiszusammensetzung gemäß Anspruch 1, wobei die Wassereiszusammensetzung als Ganzes zwischen 0,1 und 10 Gew.-% Glycerol enthält.

3. Wassereiszusammensetzung gemäß einem der Ansprüche 1-2, wobei die Wassereiszusammensetzung ferner einen hochintensiven Süßstoff enthält.

4. Wassereiszusammensetzung gemäß einem der Ansprüche 1-3, wobei die Wassereiszusammensetzung den Kriterien für Zahnfreundlichkeit, wenn durch pH-Telemetrie gemessen, entspricht.

5. Wassereiszusammensetzung gemäß einem der Ansprüche 1-4, wobei der pH-Wert der Wassereiszusammensetzung zwischen 6 und 9 beträgt.

6. Wassereis, Sorbet oder Sherbet, das im Wesentlichen aus der Wassereiszusammensetzung gemäß einem der Ansprüche 1-5 besteht.

## Revendications

1. Composition de glace à l'eau contenant entre 5 et 40% en poids d'une composition d'édulcorant, où la composition d'édulcorant contient entre 10 et 100% en poids de glucides et éventuellement des dérivés de ceux-ci, où sensiblement tous les glucides ou dérivés de ceux-ci sont non cariogènes, et où :
- au moins 99,5% en poids de tous les glucides ou dérivés de ceux-ci dans la composition de glace à l'eau sont inoffensifs pour les dents ;
- le % en poids total de tout alcool de sucre dans la composition d'édulcorant est inférieur au % en poids total des glucides dans la composition d'édulcorant ;
- la composition de glace à l'eau dans son ensemble contient entre 7 et 30% en poids d'isomaltulose et entre 2 et 12% en poids de D-tagatose, et
- la composition de glace à l'eau contient moins de 5% en poids de matières grasses et moins de 5% en poids de protéines.

2. Composition de glace à l'eau selon la revendication 1, où la composition de glace à l'eau dans son ensemble contient entre 0,1 et 10% en poids de glycérol.

3. Composition de glace à l'eau selon l'une quelconque des revendications 1-2, où la composition de glace à l'eau contient en outre un édulcorant à haute intensité.

4. Composition de glace à l'eau selon l'une quelconque des revendications 1-3, où la composition de glace à l'eau remplit les critères d'innocuité vis-à-vis des dents lors d'une mesure au moyen de télémétrie du pH.

5. Composition de glace à l'eau selon l'une quelconque des revendications 1-4, où le pH de la composition de glace à l'eau se trouve entre 6 et 9.

6. Glace à l'eau, sorbet ou sorbet laitier, constitué(e) essentiellement de la composition de glace à l'eau selon l'une quelconque des revendications 1-5.
